# EUROPEAN PATENT APPLICATION

(11) **EP 4 057 397 A1**
(43) Date of publication of application: **14.09.2022**
(21) Application number: 22152042.2
(22) Date of filing: 18.01.2022
(51) Int. Cl.: H01M 4/88, H01M 8/0273, H01M 8/0284, H01M 8/0286, H01M 8/1004

(54) **MEMBRANE ELECTRODE ASSEMBLY AND MANUFACTURING METHOD FOR MEMBRANE ELECTRODE ASSEMBLY**

(30) Priority: 08.03.2021 JP 2021036333
(71) Applicant: SCREEN Holdings Co., Ltd., Kyoto 602-8585 (JP)
(72) Inventor: YAMANAKA, Masatake, Kyoto, 602-8585 (JP)
(74) Representative: Goddar, Heinz J.

(57) **Abstract**

To provide a technique that facilitates management of information about each individual membrane electrode assembly.

A membrane electrode assembly 1 includes an electrolyte membrane 11, a catalyst layer 13a, a catalyst layer 13b, subgaskets 15 in a pair, and an information part 17. The catalyst layer 13a is located on a first surface of the electrolyte membrane 11. The catalyst layer 13b is located on a second surface of the electrolyte membrane 11. The subgaskets 15 in a pair are bonded to corresponding opposite surfaces of the electrolyte membrane 11. The information part 17 is located on a surface of the subgasket 15. The information part 17 represents information unique to the membrane electrode assembly 1.

## Description

### Technical Field

The present invention relates to a membrane electrode assembly to be applied to a fuel cell.

### Background Art

Fuel cells have attracted attention as driving power sources for automobiles, mobiles phones, etc. Fuel cells are power generation systems of generating power using electrochemical reaction between hydrogen (H₂) contained in fuel and oxygen (O₂) in the air. Fuel cells have an advantage of achieving higher power generation efficiency and placing lower load on environment than other types of batteries.

Fuel cells are divided into several types in response to electrolytes to be used. One of such fuel cells is a polymer electrolyte fuel cell (PEFC) using an ion-exchange membrane as an electrolyte (electrolyte membrane). The polymer electrolyte fuel cell achieves operation at ordinary temperatures and reduction in size and weight, so that it is expected to be applied to automobiles or portable devices.

The polymer electrolyte fuel cell generally has a configuration with a stack of a plurality of cells. One of the cells is formed by holding a membrane electrode assembly (MEA) between separators in a pair from opposite sides. The membrane electrode assembly includes an electrolyte membrane and catalyst layers in a pair formed on opposite surfaces of the electrolyte membrane. One of the catalyst layers in a pair functions as an anode electrode, and the other as a cathode electrode. As fuel gas containing hydrogen contacts the anode electrode and air contacts the cathode electrode, electrochemical reaction is caused to generate power. A prior-art technique relating to such a membrane electrode assembly is disclosed in Patent Literature 1, for example.

### Citation List

### Patent Literature

Patent Literature 1: Japanese Patent Application Laid-Open No. 2018-147890

### Summary of Invention

### Technical Problem

For mass production of membrane electrode assemblies, information about the membrane electrode assemblies is managed in units of lots and information about each membrane electrode assembly is not managed individually. For this reason, the occurrence of a defect at a particular membrane electrode assembly causes a risk that membrane electrode assemblies should be collected or disposed of in units of lots. Furthermore, as information about membrane electrode assemblies is managed in units of lots, the occurrence of a product defect at a particular membrane electrode assembly may cause difficulty in searching for a cause for the defect.

The present invention is intended to provide a technique that facilitates management of information about each individual membrane electrode assembly.

### Solution to Problem

To solve the foregoing problem, a first aspect is intended for a membrane electrode assembly to be applied to a fuel cell, comprising: an electrolyte membrane; a first catalyst layer located on a first surface of the electrolyte membrane; a first subgasket bonded to the electrolyte membrane; and an information part located on a surface of the first subgasket and representing information unique to the membrane electrode assembly.

According to a second aspect, in the membrane electrode assembly according to the first aspect, the first subgasket includes a protrusion protruding externally from an outer periphery of the electrolyte membrane, and the information part is located on a surface of the protrusion.

According to a third aspect, the membrane electrode assembly according to the second aspect further comprises: a second catalyst layer located on a second surface of the electrolyte membrane; and a second subgasket bonded to the electrolyte membrane and bonded to the protrusion of the first subgasket, wherein the information part is located between the first subgasket and the second subgasket.

A fourth aspect is intended for a membrane electrode assembly to be applied to a fuel cell, comprising: an electrolyte membrane base material including an electrolyte membrane provided with a first catalyst layer; and an information part located at the electrolyte membrane base material and representing information unique to the membrane electrode assembly.

According to a fifth aspect, in the membrane electrode assembly according to the fourth aspect, the information part is located at the electrolyte membrane.

According to a sixth aspect, in the membrane electrode assembly according to the fourth aspect, the electrolyte membrane base material includes a sheet bonded to the electrolyte membrane, and the information part is located at the sheet.

According to a seventh aspect, in the membrane electrode assembly according to any one of the first to sixth aspects, the unique information includes identification information.

An eighth aspect is intended for a manufacturing method for a membrane electrode assembly to be applied to a fuel cell, comprising the steps of: a) preparing an electrolyte membrane with a first catalyst layer; b) preparing a first subgasket; c) recording an information part representing information unique to the membrane electrode assembly on the first subgasket; and d) bonding the first subgasket with the information part recorded by the step c) to the electrolyte membrane.

A ninth aspect is intended for a manufacturing method for a membrane electrode assembly to be applied to a fuel cell, comprising the steps of: A) forming a first catalyst layer on an electrolyte membrane; and B) recording an information part representing information unique to the membrane electrode assembly on an electrolyte membrane base material including the electrolyte membrane with the first catalyst layer formed by the step A).

### Advantageous Effects of Invention

In the membrane electrode assembly according to the first aspect, the information part representing information unique to the membrane electrode assembly is assigned to the first subgasket. This facilitates management of information about each individual membrane electrode assembly on the basis of the information part. Furthermore, providing the information part on the surface of the first subgasket achieves effective use of space at the surface of the first subgasket.

In the membrane electrode assembly according to the second aspect, the information part is provided at the protrusion protruding externally from the outer periphery of the electrolyte membrane. This makes it possible to reduce a probability that the electrolyte membrane will become a hindrance to reading of the information part.

In the membrane electrode assembly according to the third aspect, the information part is located between the first subgasket and the second subgasket to allow protection of the information part.

In the membrane electrode assembly according to the fourth aspect, the information part representing information unique to the membrane electrode assembly is assigned to the electrolyte membrane base material. This facilitates management of information about each individual membrane electrode assembly on the basis of the information part.

In the membrane electrode assembly according to the fifth aspect, the information part representing information unique to the membrane electrode assembly is assigned to the electrolyte membrane of the electrolyte membrane base material. This facilitates management of information about each individual membrane electrode assembly on the basis of the information part.

In the membrane electrode assembly according to the sixth aspect, the information part representing information unique to the membrane electrode assembly is assigned to the sheet of the electrolyte membrane base material. This facilitates management of information about each individual membrane electrode assembly on the basis of the information part.

The membrane electrode assembly according to the seventh aspect facilitates management of information about each individual membrane electrode assembly on the basis of the identification information.

In the manufacturing method for the membrane electrode assembly according to the eighth aspect, the information part is recorded on the first subgasket. This facilitates management of information about each individual membrane electrode assembly on the basis of the information part.

In the manufacturing method for the membrane electrode assembly according to the ninth aspect, the information part representing information unique to the membrane electrode assembly is assigned to the electrolyte membrane base material provided with the first catalyst layer. This facilitates management of information about each individual membrane electrode assembly on the basis of the information part.

### Brief Description of Drawings

Fig. 1 is a plan view of a membrane electrode assembly according to a preferred embodiment;
Fig. 2 is a sectional view of the membrane electrode assembly shown in Fig. 1;
Fig. 3 shows the configuration of a membrane electrode assembly manufacturing apparatus;
Fig. 4 is a plan view showing how a catalyst layer is formed on an electrolyte membrane;
Fig. 5 is a plan view showing how an information recorder records an information part on an electrolyte membrane base material;
Fig. 6 includes side sectional views showing corresponding states of a subgasket base material processed by a second supplier;
Fig. 7 is a plan view showing how a first bonding part bonds the subgasket base material to the electrolyte membrane base material; and
Fig. 8 includes sectional views showing corresponding states of a membrane electrode assembly web.

### Description of Preferred Embodiments

A preferred embodiment of the present invention will be described below by referring to the drawings. Constituting elements in the preferred embodiment are described merely as examples, and the scope of the present invention is not to be limited only to these elements. To facilitate understanding, the size of each part or the number of such parts in the drawings may be illustrated in an exaggerated or simplified manner, if appropriate.

### <1. Preferred embodiment>

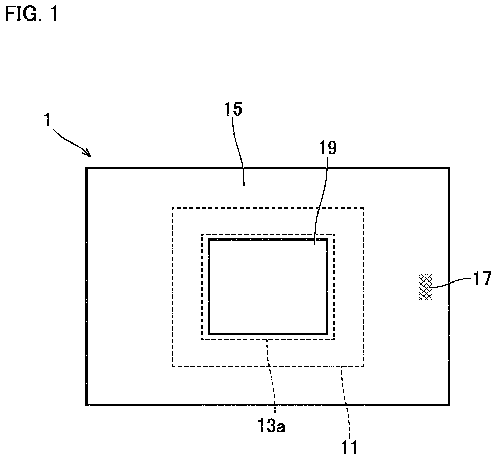

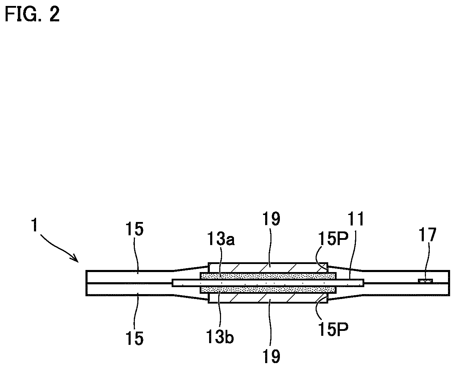

Fig. 1 is a plan view of a membrane electrode assembly 1 according to a preferred embodiment. Fig. 2 is a sectional view of the membrane electrode assembly 1 shown in Fig. 1. The membrane electrode assembly 1 shown in Figs. 1 and 2 is applied to a polymer electrolyte fuel cell, for example.

The membrane electrode assembly 1 includes an electrolyte membrane 11 and catalyst layers 13a and 13b in a pair. The catalyst layer 13a is located on a first surface of the electrolyte membrane 11 on one side, and the catalyst layer 13b is located on a second surface of the electrolyte membrane 11 on the opposite side. In the following, a direction in which the catalyst layer 13a or the catalyst layer 13b is stacked on the electrolyte membrane 11 will be called a "thickness direction."

A fluorine-based or hydrocarbon-based polyelectrolyte membrane is used as the electrolyte membrane 11. Specific examples of the electrolyte membrane 11 include polyelectrolyte membranes containing perfluorocarbon sulfonic acid (for example, Nafion (registered trademark) available from DuPont US, Flemion (registered trademark) available from AGC Inc., Aciplex (registered trademark) available from AGC Inc., and Goreselect (registered trademark) available from W. L. Gore & Associates). The electrolyte membrane 11 has a thickness from 5 to 30 µm, for example. While the electrolyte membrane 11 swells with moisture in the atmosphere, it contracts with humidity reduction. Namely, the electrolyte membrane 11 has a property of being deformed easily in response to a humidity in the atmosphere.

A material to cause fuel cell reaction at an anode or a cathode of a polymer fuel cell is used as a material of the catalyst layers 13a and 13b. More specifically, catalyst particles of platinum (Pt), a platinum alloy, or a platinum compound are used as a material of the catalyst layers 13a and 13b. For example, the platinum alloy may be an alloy of at least one type of metals selected from a group constituting of ruthenium (Ru), palladium (Pd), nickel (Ni), molybdenum (Mo), iridium (Ir), and Iron (Fe), and platinum. Generally, platinum is used as a material of a catalyst layer for a cathode, and a platinum alloy is used as a material of a catalyst layer for an anode. The catalyst layers 13a and 13b are each formed by applying a paste composition for catalyst layer formation to a surface of the electrolyte membrane 11, and then drying the paste composition.

The membrane electrode assembly 1 shown in Figs. 1 and 2 includes subgaskets 15 in a pair. The subgaskets 15 in a pair are bonded with adhesives to the opposite surfaces of the electrolyte membrane 11.

The subgaskets 15 have frame-like shapes each having an opening 15P formed at the center. The catalyst layers 13a and 13b are located in the corresponding openings 15P of the subgaskets 15. The subgaskets 15 each have an outer periphery protruding externally from an outer periphery of the electrolyte membrane 11. The respective protrusions of the subgaskets 15 are bonded to each other with an adhesive.

The subgaskets 15 function to prevent leakage of supplied gas and generated water, and are intended to facilitate handling of the membrane electrode assembly 1. The subgaskets 15 are films made of polyethylene terephthalate (PET), polyethylene naphthalate (PEN), polyphenylene sulfide (PPS), or polystyrene (PS). Each of the subgaskets 15 may have a thickness (25 to 100 µm, for example) greater than that of the catalyst layer 13a or the catalyst layer 13b.

The membrane electrode assembly 1 includes an information part 17. The information part 17 represents information unique to the membrane electrode assembly 1. More specifically, the information part 17 represents identification information for identifying each individual membrane electrode assembly 1. The information part 17 is optically readable and is a character string or a pattern representing the identification information in a coded fashion. Preferably, the information part 17 is a two-dimensional code. Employing a two-dimensional code as the information part 17 makes it possible to record a larger quantity of information on the membrane electrode assembly 1 in limited space thereof. Alternatively, the information part 17 may be a one-dimensional bar code. The information part 17 may also be a pattern other than a character string or a one-dimensional/two-dimensional code. As long as no gap is formed between the information part 17 and the subgasket 15, the information part 17 may be a three-dimensional code.

The information part 17 is provided on an outer surface of one of the subgaskets 15 in a pair. Providing the information part 17 on the outer surface of the subgasket 15 in this way achieves effective use of the outer surface of the subgasket 15.

The information part 17 is provided at the protrusion of the subgasket 15 protruding from the outer periphery of the electrolyte membrane 11. Specifically, the information part 17 is arranged at a position not overlapping the electrolyte membrane 11 in the thickness direction. This facilitates reading of the information part 17 compared to arrangement where the information part 17 overlaps the electrolyte membrane 11.

The information part 17 is arranged on an outer surface of one of the subgaskets 15 pointed toward the other subgasket 15. By doing so, the information part 17 is located between the subgaskets 15 in a pair. This allows the information part 17 to be protected using the subgaskets 15 in a pair on the opposite sides of the information part 17. The subgaskets 15 are light-transmitting members. This allows the information part 17 to be read easily from outside through the subgaskets 15.

The identification information represented by the information part 17 assigned to the membrane electrode assembly 1 is managed in a database in association with information about the membrane electrode assembly 1. This makes it possible to acquire information about each membrane electrode assembly 1 easily through reading of the information part 17 assigned to each membrane electrode assembly 1. This facilitates management of information about each individual membrane electrode assembly 1 on the basis of the information part 17.

As shown in Figs. 1 and 2, the membrane electrode assembly 1 may include gas diffusion layers 19 in a pair. The gas diffusion layers 19 in a pair are provided one by one in the opening 15P of each of the subgaskets 15 in a pair. The gas diffusion layers 19 are bonded to corresponding outer surfaces of the catalyst layers 13a and 13b.

### <Production of membrane electrode assembly>

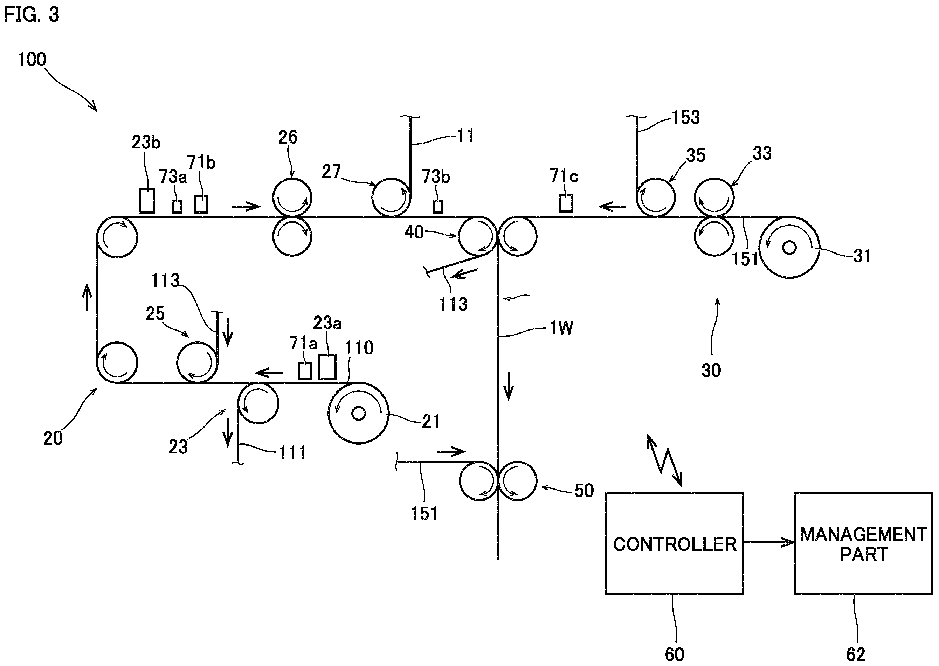

Fig. 3 shows the configuration of a membrane electrode assembly manufacturing apparatus 100. The membrane electrode assembly manufacturing apparatus 100 manufactures an elongated strip-shaped membrane electrode assembly web 1W including a plurality of the membrane electrode assemblies 1 by forming the catalyst layers 13a and 13b on the opposite surfaces of the electrolyte membrane 11, and bonding subgasket base materials 151 including the subgaskets 15 to the opposite surfaces of the electrolyte membrane 11 provided with the catalyst layers 13a and 13b.

The membrane electrode assembly manufacturing apparatus 100 may be configured to form the catalyst layer 13a only on a single surface of the electrolyte membrane 11. Alternatively, the membrane electrode assembly manufacturing apparatus 100 may be configured to bond the subgasket base material 151 only to a single surface of the electrolyte membrane 11. In another case, the membrane electrode assembly manufacturing apparatus 100 may include a structure for bonding the gas diffusion layer 19 to the membrane electrode assembly 1.

The membrane electrode assembly manufacturing apparatus 100 includes a first supplier 20, a second supplier 30, a first bonding part 40, a second bonding part 50, a controller 60, and a management part 62. The first supplier 20 supplies the electrolyte membrane 11 with the catalyst layers 13a and 13b formed on the opposite surfaces to the first bonding part 40. The second supplier 30 supplies the subgasket 15 to the first bonding part 40. The first bonding part 40 bonds the subgasket 15 to one surface of the electrolyte membrane 11. The second bonding part 50 bonds the subgasket 15 to the opposite surface of the electrolyte membrane 11.

The controller 60 has a configuration as a computer including a CPU, a RAM, etc., and controls the operation of the membrane electrode assembly manufacturing apparatus 100. The management part 62 is a database storing information about each individual membrane electrode assembly 1 included in the membrane electrode assembly web 1W manufactured by the membrane electrode assembly manufacturing apparatus 100, and is a device for managing information about each individual membrane electrode assembly 1.

The controller 60 stores identification information about each membrane electrode assembly 1 and manufacture-related information related to manufacture of the catalyst layers 13a and 13b and the subgasket 15 belonging to each membrane electrode assembly 1 into the management part 62. The manufacture-related information may include date and time of manufacture or a place of the manufacture. The manufacture-related information may include a coating condition for coating a paste composition for forming the catalyst layers 13a and 13b (such as a component or the amount of the paste composition, a temperature, or a transport speed for the electrolyte membrane 11). The management part 62 may be configured to store inspection-related information representing result of inspection conducted on the catalyst layers 13a and 13b.

The membrane electrode assembly manufacturing apparatus 100 includes an information recorder 71a, an information recorder 71b, and an information recorder 71c, and an information reader 73a and an information reader 73b. The information recorders 71a, 71b, and 71c record an information part 17a, an information part 17b, and an information part 17c respectively on the basis of control signals from the controller 60. The information recorders 71a, 71b, and 71c are configured using ink-jets for ejecting ink droplets, for example. The information recorder may be configured to record the information part by changing the color of a recording surface with a laser beam. If a laser beam is used, however, the color of the information part formed on the recording surface depends on a material of the recording surface. Hence, reading of the information part becomes difficult in a manner that depends on a material of the recording surface. For this reason, it is more preferable to employ an ink-jet system to the information recorder in terms of recording of the information part.

The information readers 73a and 73b read the information parts 17a and 17b respectively. The information readers 73a and 73b each include an image sensor or a line sensor. The information readers 73a and 73b transit the read information parts 17a and 17b respectively to the controller 60.

### <First supplier>

The first supplier 20 includes a first supply roller 21, a coater 23a, a coater 23b, and the information recorders 71a and 71b. The first supplier 20 further includes a first sheet stripping part 23 and a second sheet bonding part 25.

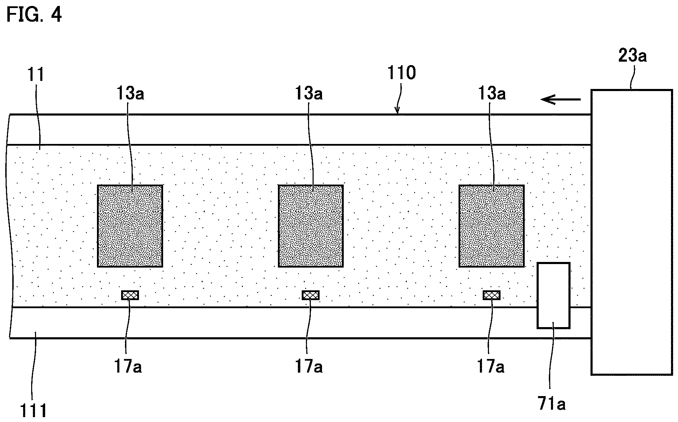

The first supply roller 21 is to unwind an elongated strip-shaped electrolyte membrane base material 110 wound in a roll shape. The electrolyte membrane base material 110 includes an elongated strip-shaped first sheet 111 and the elongated strip-shaped electrolyte membrane 11. The electrolyte membrane 11 is bonded to a surface of the first sheet 111. The electrolyte membrane 11 is bonded to the first sheet 111 with adhesive force of such an extent as to allow the electrolyte membrane 11 to be stripped easily from the first sheet 111. The first sheet 111 is greater in width than the electrolyte membrane 11 (see Fig. 4). As a transport roller is driven, the electrolyte membrane base material 110 unwound from the first supply roller 21 is transported to the coater 23a.

Fig. 4 is a plan view showing how the catalyst layer 13a is formed on the electrolyte membrane 11. As shown in Fig. 4, the coater 23a has an ejection port through which a paste composition for forming the catalyst layer 13a is ejected. On the basis of a control signal from the controller 60, the coater 23a ejects the paste composition intermittently through the ejection port to a surface of the electrolyte membrane 11 transported in a predetermined direction. By doing so, the catalyst layers 13a are formed with a predetermined pitch on the surface (first surface) of the electrolyte membrane 11. The coater 23a is an example of a catalyst layer forming part. A drier for drying the catalyst layer 13a may be provided downstream from the coater 23a.

On the basis of a control signal from the controller 60, the information recorder 71a records the information part 17a on a surface of the elongated strip-shaped electrolyte membrane 11. The information part 17a includes identification information unique to a membrane electrode assembly composed of the electrolyte membrane 11 provided with the catalyst layer 13a. Assigning the unique identification information at the time of formation of the catalyst layer 13a in this way allows the membrane electrode assembly being manufactured to be managed on the basis of the identification information.

The controller 60 stores the identification information represented by the information part 17a recorded by the information recorder 71a into the management part 62. The controller 60 stores manufacture-related information corresponding to the catalyst layer 13a into the management part 62 in association with identification information corresponding to the catalyst layer 13a.

As shown in Fig. 4, the information recorder 71a records the information part 17a corresponding to the catalyst layer 13a on a position adjacent to this catalyst layer 13a in the width direction. In this way, the information part 17a is preferably recorded on a position in the vicinity of the corresponding catalyst layer 13a. Specifically, the information part 17a is preferably located in a position closer to the corresponding catalyst layer 13a than the other catalyst layers 13a that are not corresponding.

Preferably, the information recorder 71a is located downstream from and adjacent to the coater 23a. The information recorder 71a records the information part 17a corresponding to the catalyst layer 13a immediately after this catalyst layer 13a is formed by the coater 23a. This reduces a time lag between time of formation of the catalyst layer 13a and time of recording of the information part 17a, making it possible to reduce the occurrence of recording error of the information part 17a.

As shown in Fig. 3, an area of the electrolyte membrane base material 110 provided with the catalyst layer 13a is transported to the first sheet stripping part 23. The first sheet stripping part 23 strips and collects the first sheet 111 from the electrolyte membrane base material 110. An area of the electrolyte membrane base material 110 downstream from the first sheet stripping part 23 has a two-layer structure including the electrolyte membrane 11 and the catalyst layer 13a.

The area of the electrolyte membrane base material 110 from which the first sheet 111 has been stripped is transported to the second sheet bonding part 25. The second sheet bonding part 25 bonds an elongated strip-shaped second sheet 113 to the first surface (a surface on which the catalyst layer 13a is formed) of the electrolyte membrane 11. Specifically, an area of the electrolyte membrane base material 110 downstream from the second sheet bonding part 25 has a three-layer structure including the electrolyte membrane 11, the second sheet 113, and the catalyst layer 13a formed between the electrolyte membrane 11 and the second sheet 113.

The electrolyte membrane base material 110 to which the second sheet 113 is bonded is transported to the coater 23b. Like the coater 23a, the coater 23b has an ejection port through which a paste composition for forming the catalyst layer 13b is ejected. The coater 23b ejects the paste composition intermittently through the ejection port to a surface of the electrolyte membrane 11 transported in a lengthwise direction of the electrolyte membrane base material 110. By doing so, the catalyst layers 13b are formed in a predetermined pitch on the surface (second surface) of the electrolyte membrane 11. The catalyst layer 13b is formed directly behind the catalyst layer 13a. A drier for drying the catalyst layer 13b may be provided downstream from the coater 23b.

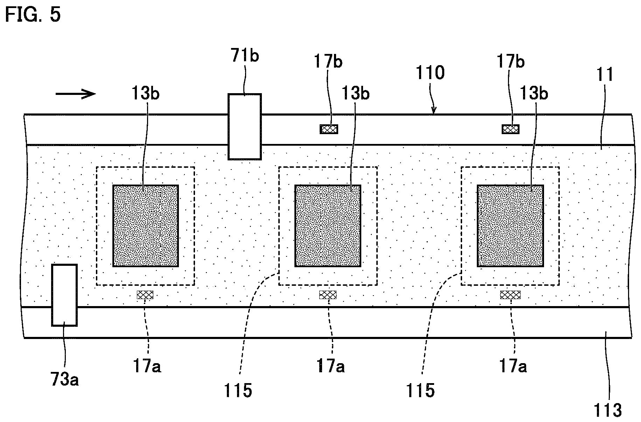

Fig. 5 is a plan view showing how the information recorder 71b records the information part 17 on the electrolyte membrane base material 110. As shown in Figs. 3 and 5, the first supplier 20 includes the information reader 73a. The information reader 73a is arranged downstream from the information recorder 71a. In this example, the information reader 73a is arranged downstream from the coater 23b. The information reader 73a reads the information part 17a recorded on the electrolyte membrane 11.

As shown in Fig. 5, the information reader 73a is arranged on the side of the second surface of the electrolyte membrane 11 on the opposite side of the first surface thereof on which the information part 17a is formed. In this regard, the electrolyte membrane 11 has transparency to allow the information reader 73a to read the information part 17a even from the side of the second surface of the electrolyte membrane 11. The information reader 73a may be arranged on the side of the first surface of the electrolyte membrane 11.

The information recorder 71b is arranged downstream from the information reader 73a. The information recorder 71b records the information part 17b on the electrolyte membrane base material 110. The information part 17b recorded by the information recorder 71b represents identification information same as the information represented by the information part 17a read by the information reader 73a.

When the information recorder 71b records the information part 17b, the controller 60 may store manufacture-related information about the catalyst layer 13b corresponding to the information part 17b into the management part 62 in association with the identification information represented by the information part 17b. This allows the manufacture-related information about each individual catalyst layer 13b to be managed in the management part 62.

The information recorder 71b records the information part 17b on a position in the vicinity of the catalyst layer 13b directly behind the catalyst layer 13a assigned with the information part 17a. In the example shown in Fig. 5, the information recorder 71b records the information part 17b corresponding to the catalyst layer 13b on a position adjacent to this catalyst layer 13b in the width direction. The second sheet 113 is greater in width than the electrolyte membrane 11 and has a protrusion protruding externally from an outer periphery of the electrolyte membrane 11. The information recorder 71b records the information part 17b on an area of the second sheet 113 protruding from the electrolyte membrane 11.

An area of the electrolyte membrane base material 110 with the recorded information part 17b is transported to a first half cutting part 26. For example, the first half cutting part 26 has a roller with a blade (pinnacle blade) attached to an outer peripheral surface of the roller. The first half cutting part 26 performs first half cutting process on the electrolyte membrane base material 110. The first half cutting process is to divide the strip-shaped electrolyte membrane 11 into a necessary area and an unnecessary area without penetrating the second sheet 113. More specifically, as shown in Fig. 5, the first half cutting part 26 cuts the electrolyte membrane 11 along a rectangular cut frame 115 defined around the catalyst layer 13b.

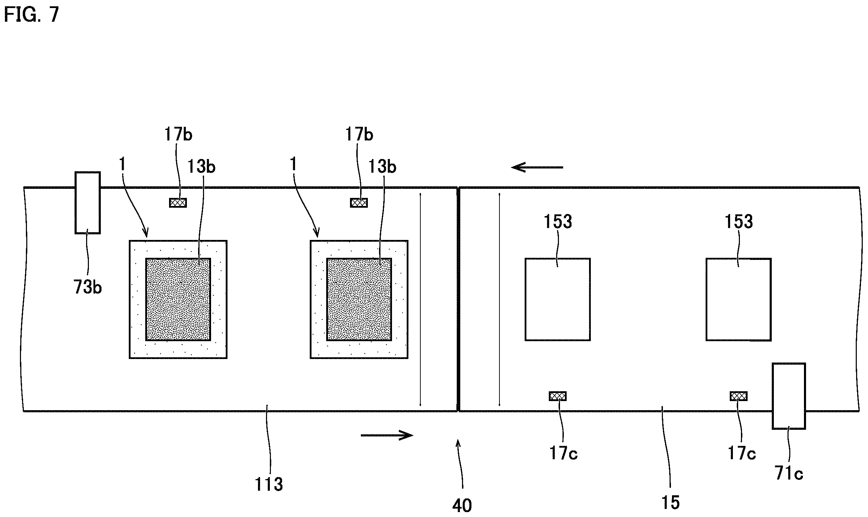

As shown in Fig. 3, an area of the electrolyte membrane base material 110 cut by the first half cutting part 26 is transported to an electrolyte membrane stripping part 27. The electrolyte membrane stripping part 27 strips an unnecessary area of the electrolyte membrane 11 from the electrolyte membrane base material 110. As a result, in the electrolyte membrane base material 110, only the electrolyte membrane 11 in the rectangular cut frame 115 with the catalyst layers 13a and 13b provided on the opposite surfaces of the electrolyte membrane 11 is left on the second sheet 113. Specifically, the membrane electrode assemblies 1 each including the rectangular electrolyte membrane 11 and the catalyst layers 13a and 13b in a pair are formed with a predetermined pitch on the second sheet 113 (see Fig. 7). The membrane electrode assemblies 1 left on the second sheet 113 are transported to the first bonding part 40.

As shown in Fig. 5, the information part 17a is located in an unnecessary area of the electrolyte membrane 11 external to the cut frame 115. Thus, the information part 17a is removed by the stripping of the electrolyte membrane 11. On the other hand, the information part 17b is left on the second sheet 113. Thus, the information part 17b representing the same identification information as the information part 17a is transported to the first bonding part 40 while remaining on the electrolyte membrane base material 110.

### <Second supplier>

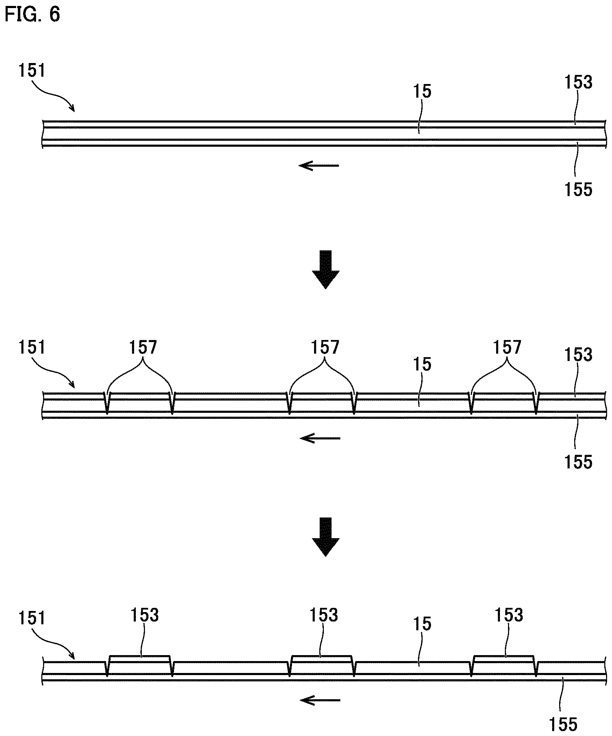

The second supplier 30 will be described next by referring to Fig. 6. Fig. 6 includes side sectional views showing corresponding states of the subgasket base material 151 processed by the second supplier 30.

As shown in Fig. 3, the second supplier 30 includes a second supply roller 31, a second half cutting part 33, and a top-sheet stripping part 35. The second supply roller 31 is to unwind the elongated strip-shaped subgasket base material 151 wound in a roll shape. As shown in the upper view in Fig. 6, the subgasket base material 151 unwound from the second supply roller 31 includes the subgasket 15, a top-sheet 153, and a back-sheet 155 each having an elongated strip-shape. The top-sheet 153 is bonded to one surface of the subgasket 15, and the back-sheet 155 is bonded to the opposite surface of the subgasket 15. In this way, the subgasket base material 151 unwound from the second supply roller 31 has a three-layer structure. An area of the subgasket base material 151 unwound from the second supply roller 31 is transported to the second half cutting part 33.

Like the first half cutting part 26, for example, the second half cutting part 33 has a roller with a blade (pinnacle blade) attached to an outer peripheral surface of the roller. The second half cutting part 33 performs second half cutting process on the subgasket base material 151. As shown in the middle view in Fig. 6, the second half cutting process is to form a cut-out portion 157 in the subgasket base material 151, which is process of cutting the top-sheet 153 and the subgasket 15 without penetrating the back-sheet 155.

The second half cutting part 33 forms the cut-out portion 157 of a rectangular shape responsive to the opening 15P of the subgasket 15 (see Fig. 2) at the membrane electrode assembly 1. As the subgasket base material 151 passes through the second half cutting part 33, the cut-out portions 157 are formed at a predetermine interval at the subgasket base material 151. An area of the subgasket base material 151 given the cut-out portions 157 are transported to the top-sheet stripping part 35.

As shown in Fig. 3, the top-sheet stripping part 35 strips an unnecessary area of the top-sheet 153 from the subgasket base material 151. The unnecessary area of the top-sheet 153 is an area of the top-sheet 153 located external to the rectangular cut-out portion 157. As shown in the lower view in Fig. 6, by stripping the unnecessary area of the top-sheet 153, an area of the top-sheet 153 internal to the cut-out portion 157 is left in the subgasket base material 151. As shown in Fig. 3, an area of the subgasket base material 151 from which the top-sheet 153 has been stripped is transported to the first bonding part 40.

### <First bonding part>

As shown in Fig. 3, the first bonding part 40 includes rollers in a pair. The electrolyte membrane base material 110 is hung around one of the rollers in a pair, and the subgasket base material 151 is hung around the other roller. The first bonding part 40 presses the rollers in a pair against each other to press the subgasket base material 151 against the electrolyte membrane base material 110 between the rollers in a pair. By doing so, the subgasket base material 151 is bonded to the electrolyte membrane base material 110.

As shown in Fig. 3, immediately after the first bonding part 40 forms the membrane electrode assembly web 1W, the second sheet 113 is stripped from the membrane electrode assembly web 1W. The membrane electrode assembly web 1W from which the second sheet 113 has been stripped is then transported to the second bonding part 50.

Fig. 7 is a plan view showing how the first bonding part 40 bonds the subgasket base material 151 to the electrolyte membrane base material 110. The first bonding part 40 bonds the top-sheet 153 of the subgasket base material 151 to the catalyst layer 13b of the electrolyte membrane base material 110. As a result, the membrane electrode assembly web 1W is formed in which the subgasket base material 151 is bonded to one surface of the electrolyte membrane base material 110 (a surface with the catalyst layer 13b).

As shown in Fig. 7, the first supplier 20 includes the information reader 73b. The information reader 73b reads the information part 17b recorded on the second sheet 113 of the electrolyte membrane base material 110, and transmits the read information part 17b to the controller 60. The controller 60 transmits the information part 17b received from the information reader 73b to the information recorder 71c. The information recorder 71c records the information part 17c on the subgasket base material 151. Information represented by the information part 17c includes the identification information represented by the information part 17b.

The information recorder 71c records the information part 17c on a position in the vicinity of the top-sheet 153 to be bonded to the catalyst layer 13b corresponding to the information part 17b. In the example shown in Fig. 7, the information recorder 71c records the information part 17c on a position adjacent to the top-sheet 153 in the width direction. The information part 17c is recorded on a position adjacent to the top-sheet 153 to be bonded to the membrane electrode assembly 1 assigned with the information part 17b representing the same identification information as this information part 17c.

When the information recorder 71c records the information part 17c, the controller 60 may store information about the subgasket 15 on which the information part 17c is recorded into the management part 62 in association with the identification information represented by the information part 17c. This allows management of the information about the subgasket 15 in the management part 62 for each individual membrane electrode assembly 1.

### <Second bonding part>

The second bonding part 50 bonds a subgasket base material 151 to the opposite surface of the membrane electrode assembly web 1W (a surface with the catalyst layer 13a). The subgasket base material 151 to be bonded by the second bonding part 50 to the membrane electrode assembly web 1W has the same configuration as the subgasket base material 151 supplied by the second supplier 30. To supply the subgasket base material 151 to the second bonding part 50, the membrane electrode assembly manufacturing apparatus 100 may include a supplier (not shown in the drawings) having the same configuration as the second supplier 30. The second bonding part 50 bonds the subgasket base material 151 to the membrane electrode assembly web 1W in such a manner as to bond the top-sheet 153 of the subgasket base material 151 to the catalyst layer 13a of the membrane electrode assembly web 1W.

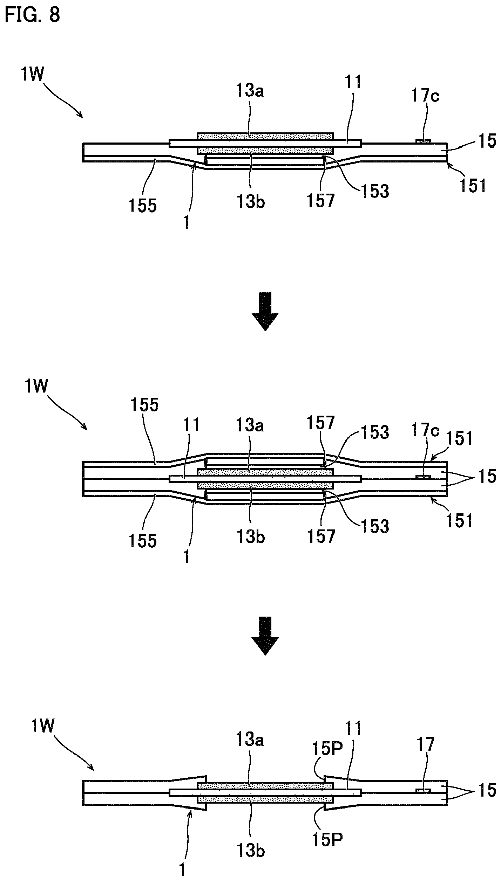

Fig. 8 includes sectional views showing corresponding states of the membrane electrode assembly web 1W. The upper view in Fig. 8 shows the membrane electrode assembly web 1W provided with the subgasket base material 151 bonded to one surface thereof after the bonding by the first bonding part 40. The middle view in Fig. 8 shows the membrane electrode assembly web 1W in a state provided with the subgasket base materials 151 bonded to the opposite surfaces thereof after the bonding by the second bonding part 50. The lower view in Fig. 8 shows the membrane electrode assembly web 1W in a state after the back-sheets 155, 155 are stripped from the opposite sides.

As the back-sheet 155 is stripped from the membrane electrode assembly web 1W, an area of the subgasket 15 and an area of the top-sheet 153 internal to the cut-out portion 157 are also stripped together with the back-sheet 155 from the membrane electrode assembly web 1W. As a result, the membrane electrode assembly web 1W shown in the lower view in Fig. 8 is obtained in which the subgaskets 15 with the openings 15P are attached to the opposite surfaces of the membrane electrode assembly web 1W. By cutting the membrane electrode assembly web 1W shown in the lower view in Fig. 8 in the width direction in such a manner that each divided area of the membrane electrode assembly web 1W includes one electrolyte membrane 11, the membrane electrode assembly 1 with the subgaskets 15 is obtained. Furthermore, by attaching the gas diffusion layers 19 on the opposite surfaces of the membrane electrode assembly 1 resulting from the division, the membrane electrode assembly 1 with the gas diffusion layers 19 shown in Figs. 1 and 2 is obtained.

As described above, the membrane electrode assembly manufacturing apparatus 100 manufactures the membrane electrode assembly 1 provided with the information part 17c representing information unique to the membrane electrode assembly 1 (here, identification information). This facilitates management of information about each individual membrane electrode assembly 1 on the basis of the information part 17c. In the membrane electrode assembly manufacturing apparatus 100, the information parts 17a and 17b are recorded on each base material being manufactured. This further achieves management of a membrane electrode assembly being manufactured on the basis of the information parts 17a and 17b.

### <2. Modifications>

While the preferred embodiment has been described above, the present invention is not limited to the foregoing description but can be modified in various ways.

While the information parts 17 and 17a to 17c represent identification information in the above-described preferred embodiment, these information parts may represent information other than identification information. For example, information represented by the information parts 17 and 17a to 17c may include information about each element constituting the membrane electrode assembly 1. More specifically, information represented by the information part 17a may include information about the catalyst layer 13a (such as manufacture-related information or inspection-related information). Information represented by the information part 17a may include information about the electrolyte membrane 11. Information represented by the information part 17b may include information about the catalyst layer 13b. Furthermore, information represented by the information part 17c may include information about the subgasket 15.

While the invention has been shown and described in detail, the foregoing description is in all aspects illustrative and does not limit the invention. It is therefore understood that numerous modifications and variations not shown can be devised without departing from the scope of the invention. The components described in the foregoing preferred embodiment and in the modifications may be combined together or omitted, as appropriate, without inconsistencies.

### Reference Signs List

- 1: Membrane electrode assembly
- 11: Electrolyte membrane
- 13a, 13b: Catalyst layer
- 15: Subgasket
- 17, 17a: Information part
- 17b, 17c: Information part
- 23a, 23b: Coater
- 40: First bonding part
- 71a, 71b, 71c: Information recorder
- 100: Membrane electrode assembly manufacturing apparatus
- 110: Electrolyte membrane base material

## Claims

1. A membrane electrode assembly (1) to be applied to a fuel cell, comprising:
an electrolyte membrane (11);
a first catalyst layer (13a) located on a first surface of said electrolyte membrane (11);
a first subgasket (15) bonded to said electrolyte membrane (11); and
an information part (17) located on a surface of said first subgasket (15) and representing information unique to said membrane electrode assembly (1).

2. The membrane electrode assembly (1) according to claim 1, wherein
said first subgasket (15) includes a protrusion protruding externally from an outer periphery of said electrolyte membrane (11), and
said information part (17) is located on a surface of said protrusion.

3. The membrane electrode assembly (1) according to claim 2, further comprising:
a second catalyst layer (13b) located on a second surface of said electrolyte membrane (11); and
a second subgasket (15) bonded to said electrolyte membrane (11) and bonded to said protrusion of said first subgasket (15), wherein
said information part (17) is located between said first subgasket (15) and said second subgasket (15).

4. A membrane electrode assembly (1) to be applied to a fuel cell, comprising:
an electrolyte membrane base material (110) including an electrolyte membrane (11) provided with a first catalyst layer (13a); and
an information part (17) located at said electrolyte membrane base material (110) and representing information unique to said membrane electrode assembly (1).

5. The membrane electrode assembly (1) according to claim 4, wherein
said information part (17) is located at said electrolyte membrane (11).

6. The membrane electrode assembly (1) according to claim 4, wherein
said electrolyte membrane base material (110) includes a sheet (111) bonded to said electrolyte membrane (11), and
said information part (17) is located at said sheet (111).

7. The membrane electrode assembly (1) according to any one of claims 1 to 6, wherein
the unique information includes identification information.

8. A manufacturing method for a membrane electrode assembly (1) to be applied to a fuel cell, comprising the steps of:
a) preparing an electrolyte membrane (11) with a first catalyst layer (13a);
b) preparing a first subgasket (15);
c) recording an information part (17) representing information unique to said membrane electrode assembly (1) on said first subgasket (15); and
d) bonding said first subgasket (15) with said information part (17) recorded by said step c) to said electrolyte membrane (11).

9. A manufacturing method for a membrane electrode assembly (1) to be applied to a fuel cell, comprising the steps of:
A) forming a first catalyst layer (13a) on an electrolyte membrane (11); and
B) recording an information part (17) representing information unique to said membrane electrode assembly (1) on an electrolyte membrane base material (110) including said electrolyte membrane (11) with said first catalyst layer (13a) formed by said step A).
